# EUROPEAN PATENT APPLICATION

(11) **EP 1 925 628 A1**
(43) Date of publication of application: **28.05.2008**
(21) Application number: 06124643.5
(22) Date of filing: 23.11.2006
(51) Int. Cl.: C08F 255/00, C08F 255/02, C08K 5/00, C08K 5/13, C08K 5/34

(54) **Process for polyolefin silane crosslinking**

(71) Applicant: Ciba Holding Inc., 4057 Basel (CH)
(72) Inventor: Herbst, Heinz, 79541 Lörrach (DE); Kolb, Markus, 79400 Kadern (DE)

(57) **Abstract**

The instant invention relates to the use of a combination of a sterically hindered amine and a phenolic antioxidant for improving the crosslinking process of a vinyl silane grafted polyolefin. A further aspect of the invention is an improved process for the crosslinking of vinyl silane grafted polyolefins in the presence of a sterically hindered amine stabilizer and selected phenolic antioxidants.

## Description

The instant invention relates to the use of a combination of a sterically hindered amine and a phenolic antioxidant for improving the crosslinking process of a vinyl silane grafted polyolefin. A further aspect of the invention is an improved process for the crosslinking of vinyl silane grafted polyolefins in the presence of a sterically hindered amine stabilizer and selected phenolic antioxidants.

Silane crosslinking technology is, for example, used for low voltage (LV) cable, PEX-b pipes (silane crosslinked polyethylene pipes) and films. A typical process comprises 2 main steps: (1) grafting of vinyl silane onto the polymer backbone and (2) a consecutive crosslinking of the silane groups with water. Usually, reels of wire are cured in steam saunas or hot water baths for several hours. Under ambient conditions, days or weeks are required. This implicates a significant cost block and bottleneck for the LV cable production. Efficient grafting and faster curing (esp. at ambient conditions) is, therefore, a market need.

The instant invention has solved this problem by the combined use of an antioxidant and a sterically hindered amine in the grafting and crosslinking step of vinyl silanes with polyolefins. A significant acceleration of the curing step thereby results. This new and unexpected use of a combination of a sterically hindered amine and a phenolic antioxidant allows manufacturing, for example, low voltage cables considerably more cost effective

So far phenolic antioxidants and sterically hindered amines have only been used in such systems as process, heat and light stabilizers, as for example, disclosed in WO 97/24023.

Surprisingly it has now been found, that when a combination of phenolic antioxidants and sterically hindered amines is used, a significant increase in curing/crosslinking rate can be achieved. Simultaneously the final product properties, such as hardness can be improved.

Consequently one aspect of the invention is the use of a combination of a sterically hindered amine and a phenolic antioxidant for increasing the crosslinking/curing rate of vinyl silane grafted polyolefins in the presence of water or moisture.

Under polyolefins there is understood polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).

Polyolefins, i.e. the polymers of monoolefins exemplified in the preceding paragraph, preferably polyethylene and polypropylene, can be prepared by different, and especially by the following, methods:
radical polymerisation (normally under high pressure and at elevated temperature).
   catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).

Mixtures of the polymers mentioned above, for example mixtures of polypropylene with polyisobutylene, polypropylene with polyethylene (for example PP/HDPE, PP/LDPE) and mixtures of different types of polyethylene (for example LDPE/HDPE). 3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

Preferably the polyolefin is polyethylene or a copolymer thereof, examples are given above. Particular preference is given to low density polyethylene (LDPE), linear low density polyethylene (LLDPE), high density polyethylene (HDPE), medium density polyethylene (MDPE), ethylene-acrylic acid copolymers (EEA), ethylene butylacrylate copolymers (EBA) and ethylene vinyl acetate copolymers (EVA).

Vinyl silanes, their grafting to polyolefins and subsequent crosslinking are, for example, described in US 6,703,435, US 5,420,208 or in WO 97/24023.

Silanes suitable for grafting onto and crosslinking with an olefinic polymer according to the present invention are of the general formula 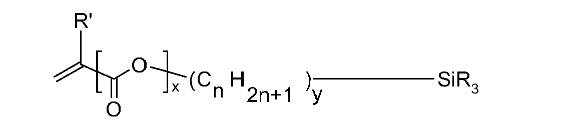 wherein: R' represents a hydrogen atom or methyl group; x and y are 0 or 1 with the proviso that when x is 1, y equals 1; n is an integer from 1 to 12 inclusive, preferably 1 to 4; and each R independently represents a hydrolyzable organic group such as an alkoxy group having 1 to 12 carbon atoms (e.g., methoxy, ethoxy, propoxy, butoxy), or a lower alkyl group having 1 to 6 carbon atoms inclusive, with the proviso that not more than one of the three R groups is an alkyl group.

Some representative examples of the unsaturated silanes useful in the present invention are vinyl triethoxysilane, vinyltrimethoxysilane, vinyl tri-isobutoxysilane, allyltriethoxysilane, vinyltri-n-butoxysilane, hexenyltri-isobutoxysilane, allyltri-n-pentoxysilane, dodecenyltri-n-octoxysilane, heptenyltri-n-heptoxysilane, allyltri-iso-propoxysilane, pentenyltri-n-propoxysilane, sec-butenyltriethoxysilane, and 3-methacryloxypropyl-trimethoxysilane.

Preferably, the silanes used in the present invention will contain a vinyl or methacryloxypropyl group as the group reacting with the free radical sites formed in the polymer by the free radical generator. These silanes are commercially available from OSi Specialties Inc. as SILQUEST® A-171, A-151, and A-174 silanes.

Preferably the vinyl silane is selected from the group consisting of vinyl trimethoxy silane, vinyl triethoxy silane, vinyl tri-i-propoxy silane, 3-methacryloxypropyltrimethoxysilane and mixtures thereof.

The most preferred silane is vinyl trimethoxysilane.

The amount of silane is chosen to be near the minimum amount needed to provide the desired degree of crosslinking. The proportion of hydrolyzable silane based on the weight of the ethylene polymer is not narrowly critical.

Typically the amount used is from 0.01 % to 10%, preferably from 0.1 % to 5 %, particularly from 0.5 % to 3 % by weight based on the weight of the polyolefin.

The free radical generator used in the present invention may be any compound that is capable of producing free radical sites in the base polymer, the reaction conditions depending on temperature and retention time needed for achieving a suitable half life. Suitable free radical generators are organic peroxides and peresters such as tert-butylperoxypivalate, tert-butylperoxy-2ethylhexanoate, dicumyl peroxide, α,α-bis(tert-butylperoxy)di-isopropylbenzene, di-tert-butyl peroxide, tert-butyl cumyl peroxide, di-benzoyl peroxide, 2,5-dimethyl-2,5-bis (tert-butylperoxy) hexane, tert-butyl perbenzoate, and combinations thereof. Also an azo compound such as 2,2-azo-bis (2,4-dimethylvaleronitrile) and azo-bis-iso-butyronitrile may be used herein. Most preferred free radical generators are the peroxides, especially dicumyl peroxide and α,α-bis(tert-butylperoxy)di-isopropylbenzene.

The amount of free radical generator necessary in the present invention is not narrowly critical and can be varied over wide ranges, for example, from 0.01 % to 2 % especialll from 0.05 % to 1.0 % by weight, based on the weight of the polyolefin.

Hydrolysis/condensation catalysts may be added in the present invention to catalyze the crosslinking of the extrudate (i.e., silane grafted olefin polymer) by reaction of the extrudate with water. The catalysts may accelerate either the hydrolysis reaction of the grafted silyl groups with water to form silanols, or the condensation of silanols to form Si-O-Si bonds, or both. These catalysts may be Lewis acids such as metal carboxylates, for example: dibutyltin dilaurate, dioctyltin dilaurate, stannous acetate, stannous octoate, dibutyltin dioctoäte, dioctyltin-bis(isooctyl maleate), dioctyltin-bis (isooctyl thioglycolate), as well as organometal compounds such as titanium esters and chelates, for example: tetrabutyl titanate, tetranonyl titanate, and bis(acetylacetonyl) di-isopropyl titanate; organic bases, such as, triethylamine, hexylamine, dibutylamine, and piperidine; and protic acids, such as fatty acids and mineral acids. Preferred hydrolysis /condensation catalysts include dibutyltin dilaurate (DBTDL), dioctyltin dilaurate (DOTDL) and stannous octoate.

The proportion of silanol condensation catalyst used is not narrowly critical, illustratively ranging from 0.01 to 0.2 wt. %, preferably 0.02 to 0.1 wt. %, based on the total weight of the extrudate.

When it is desired to store the crosslinkable polymer for some time prior to fabrication and crosslinking, a hydrolysis /condensation catalyst should not be added during the production of the silane grafted polymer. Instead, the hydrolysis/condensation catalyst should be mixed with the silane grafted polymer at the fabrication step. However, if it is desired to perform the production and fabrication of the crosslinkable polymer in a single step, the hydrolysis /condensation catalyst should be included. An extruder would be used as the mixing and compounding apparatus in this case.

Typically the sterically hindered amine contains at least one radical of the formula 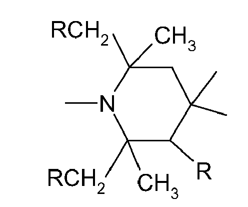 in which R is hydrogen or methyl.

Examples of commerciallly available sterically hindered amine compounds are given below:
DASTIB 845 (RTM), TINUVIN 770 (RTM), TINUVIN NOR 371 (RTM), TINUVIN 765 (RTM), TINUVIN 144 (RTM), TINUVIN 123 (RTM), TINUVIN 111 (RTM), TINUVIN 783 (RTM), TINUVIN 791 (RTM), MARK LA 52 (RTM), MARK LA 57 (RTM), MARK LA 62 (RTM), MARK LA 67 (RTM), HOSTAVIN N 20 (RTM), HOSTAVIN N 24 (RTM), SANDUVOR 3050 (RTM), DIACETAM 5 (RTM), SUMISORB TM 61 (RTM), UVINUL 4049 (RTM), SANDUVOR PR 31 (RTM), GOODRITE UV 3034 (RTM), GOODRITE UV 3150 (RTM), GOODRITE UV 3159 (RTM), GOODRITE 3110 x 128 (RTM), UVINUL 4050 H (RTM), CHIMASSORB 944 (RTM), CHIMASSORB 2020 (RTM), CYASORB UV 3346 (RTM), CYASORB UV 3529 (RTM), DASTIB 1082 (RTM), CHIMASSORB 119 (RTM), UVASIL 299 (RTM), UVASIL 125 (RTM), UVASIL 2000 (RTM), UVINUL 5050 H (RTM), LICHTSCHUTZSTOFF UV 31 (RTM), LUCHEM HA B 18 (RTM), MARK LA 63 (RTM), MARK LA 68 (RTM), UVASORB HA 88 (RTM), TINUVIN 622 (RTM), HOSTAVIN N 30 (RTM) and FERRO AM 806 (RTM).

Particularly preferred are TINUVIN 770 (RTM), TINUVIN 765 (RTM), TINUVIN NOR 371 (RTM), TINUVIN 791 (RTM), TINUVIN 622 (RTM), TINUVIN 783 (RTM), CHIMASSORB 944 (RTM), CHIMASSORB 2020 (RTM) and CHIMASSORB 119 (RTM).

Specifically suitable stericall hindered amines are selected from the group consisting of 1-(2-hydroxy-2-methylpropoxy)-4-octadecanoyloxy-2,2,6,6-tetramethylpiperidine, bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decan-2,4-dione, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane and reaction product of maleic acid anhydride-α-olefin-copolymer with 2,2,6,6-tetramethyl-4-aminopiperidine, 1,2,2,6,6-pentamethyl-4-aminopiperidine or a compound 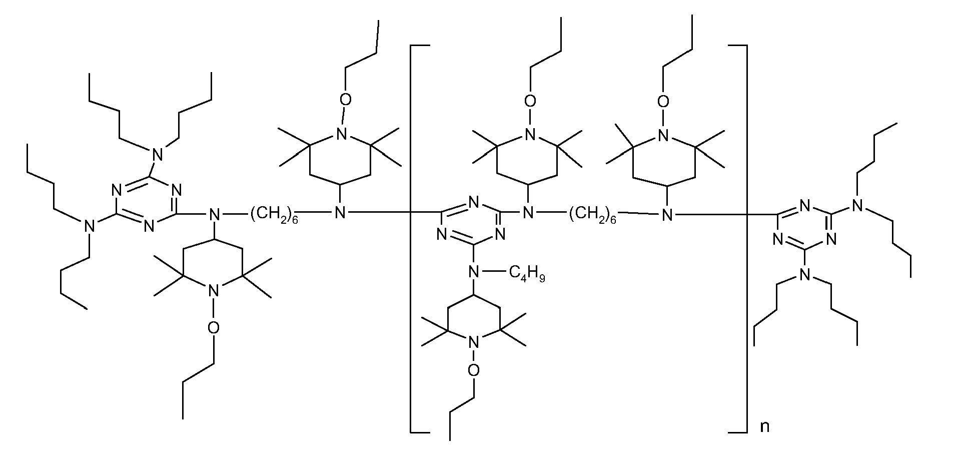 in which n is from 1 to 15.

Preferably the phenolic antioxidant contains no sulphur atom.

The phenolic antioxidants used in the present invention are widely items of commerce. They can be for example choosen from the group consisting of 2,6-di-tert-butyl-4-methylphenol, 2-tert-butyl-4,6-dimethyl phenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(a-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol, 2,4-dioctylthiomethyl-6-tert-butylphenol, 2,4-dioctylthiomethyl-6-methyl phenol, 2,4-dioctylthiomethyl-6-ethylphenol, 2,6-di-dodecylthiomethyl-4-nonylphenol, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate, α-tocopherol, β-tocopherol, γ-tocopherol, δ-tocopherol and mixtures thereof, 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 1,1,5,5-tetra-(5-tert-butyl-4-hydroxy-2-methylphenyl)pentane, dioctadecyl-2,2-bis-(3,5-di-tert-butyl-2-hydroxybenzyl)-malonate, di-octadecyl-2-(3-tert-butyl-4-hydroxy-5-methylbenzyl)-malonate, bis[4-(1,1,3,3-tetramethylbutyl)phenyl]-2,2-bis(3,5-di-tert-butyl-4-hydroxybenzyl)malonate, 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate, dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid, esters of β-(3,5-di-tert-butyl-4-hydroxyphenyl)propionic acid with mono- or polyhydric alcohols, with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of β-(5-tert-butyl-4-hydroxy-3-methylphenyl)propionic acid with mono- or polyhydric alcohols, with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of β-(3,5-dicyclohexyl-4-hydroxyphenyl)propionic acid with mono- or polyhydric alcohols, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of 3,5-di-tert-butyl-4-hydroxyphenyl acetic acid with mono- or polyhydric alcohols, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, amides of β-(3,5-di-tert-butyl-4-hydroxyphenyl)propionic acid, N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide and N,N'-bis[2-(3-[3,5-di-tert-butyl-4-hydroxyphenyl]-propionyloxy)ethyl]oxamide.

For instance they are selected from the group consisting of octadecyl-3-(3,5-di-tert.butyl-4-hydroxyphenyl)-propionate, pentaerythritol tetrakis(3-(3,5-di-tert-butyl-4-hydroxyphenyl)-propionate), 3,3',3",5,5',5"-hexa-tert-butyl-alpha, alpha', alpha" - (mesitylene-2,4,6-triyl)tri-p-cresol, 1,3,5-tris(3,5-di-tert-butyl-4-hydroxybenzyl)-1,3,5-triazine-2,4,6(1H,3H,5H)-trione, N,N'-hexane-1,6-diylbis(3-(3,5-di-tert-butyl-4-hydroxyphenylpropionamide)), ethylenebis(oxyethylene)bis-(3-(5-tert-butyl-4-hydroxy-m-tolyl)-propionate), 1,3,5-tris(4-tert-butyl-3-hydroxy-2,6-xylyl)methyl)-1,3,5-triazine-2,4,6-(1H,3H,5H)-trione, 2-(1,1-dimethylethyl)-6-[3-(1,1-dimethylethyl)-2-hydrxy-5-methylphenyl]-methyl-4-methylphenyl acrylate, Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-methylenebis (4-ethyl-6-tert-butylphenol), 2,2'-methylenebis (4-methyl-6-tert-butylphenol), 1,1',3-tris(2-methyl-4-hydroxyl-5-tert.butyl-phenyl)butane, 1,1'-bis(3,5-di-tert.butyl-4-hydroxyphenyl)-methane, bis-[3,3-bis-(4'-hydroxy-3'-t-butylphenyl)-butane acid] glycolester, (2,4,6-trioxo-1,3,5-triazine-1,3,5(2H,4H,6H)-triyl)triethylene tris(3-(3,5-di-tert-butyl-4-hydroxyphenyl)-propionate), 1,1'-bis (2-methyl-4-hydroxy-5-tert-butylphenyl)butan, 2,2'-ethylidenebis (4,6-di-tert-butylphenol), 2,2'-methylenebis (4,6-di-tert-butylphenol) and 2'-methylenebis (4-(2n-butylene)-6-tert-butylphenol).

Preferably the phenolic antioxidant is selected from the group consisting of octadecyl-3-(3,5-di-tert.butyl-4-hydroxyphenyl)-propionate, Ethylenebis(oxyethylene)bis-(3-(5-tert-butyl-4-hydroxy-m-tolyl)-propionate), 2-(1,1-dimethylethyl)-6-[3-(1,1-dimethylethyl)-2-hydrxy-5-methylphenyl]-methyl-4-methylphenyl acrylate, Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-Methylenebis (4-ethyl-6-tert-butylphenol), 2,2'-Methylenebis (4-methyl-6-tert-butylphenol), 1,1'-bis(3,5-di-tert.butyl-4-hydroxyphenyl)-methane, 1,1'-bis (2-methyl-4-hydroxy-5-tert-butylphenyl)butan, 1,3,5-tris(3,5-di-tert-butyl-4-hydroxybenzyl)-1,3,5-triazine-2,4,6(1 H,3H,5H)-trione, N,N'-hexane-1,6-diylbis(3-(3,5-di-tert-butyl-4-hydroxyphenylpropionamide)), 1,3,5-tris(4-tert-butyl-3-hydroxy-2,6-xylyl)methyl)-1,3,5-triazine-2,4,6-(1H,3H,5H)-trione, bis-[3,3-bis-(4'-hydroxy-3'-t-butylphenyl)-butane acid] glycolester, (2,4,6-trioxo-1,3,5-triazine-1,3,5(2H,4H,6H)-triyl)triethylene tris(3-(3,5-di-tert-butyl-4-hydroxyphenyl)propionate), 1,1',3-tris(2-methyl-4-hydroxyl-5-tert.butyl-phenyl)butane and mixtures thereof.

Of particular interest are the following:
1,3,5-tris(3,5-di-tert-butyl-4-hydroxybenzyl)-1,3,5-triazine-2,4,6(1 H,3H,5H)-trione, N,N'-hexane-1,6-diylbis(3-(3,5-di-tert-butyl-4-hydroxyphenylpropionamide)),
1,3,5-tris(4-tert-butyl-3-hydroxy-2,6-xylyl)methyl)-1,3,5-triazine-2,4,6-(1 H,3H,5H)-trione, bis-[3,3-bis-(4'-hydroxy-3'-t-butylphenyl)-butane acid] glycolester,
(2,4,6-trioxo-1,3,5-triazine-1,3,5(2H,4H,6H)-triyl)triethylene tris(3-(3,5-di-tert-butyl-4-hydroxyphenyl)propionate),
1,1',3-tris(2-methyl-4-hydroxyl-5-tert.butyl-phenyl)butane and mixtures thereof.

Typically the sterically hindered amine is present in an amount of from 0.01 % to 5 %, preferably from 0.05 % to 2 % and in particular from 0.1 % to 1 % by weight based on the weight of the polyolefin.

Typically the phenolic antioxidant is present in an amount of from 0.01 % to 2 %, preferably from 0.05 % to 1 % and in particular from 0.05 % to 0.5 % by weight based on the weight of the polyolefin.

The total amount of phenolic antioxidant and sterically hindered amine is typically from 0.02 % to 7 % by weight, based on the weight of the polyolefin.

For example the weight ratio between the phenolic antioxidant and the sterically hindered amine is from 0.5 / 20 to 20 / 0.5.

Further additives may be additionally used. Examples are: phosphites or phosphonites, a dye or pigment, a processing aid, a filler or reinforcing material a metal deactivator.

Typical metal deactivators are commercially available, such as IRGANOX MD 1024, Naugard XL-1, OABH, ADK Stab CDA-1, ADK CDA-6, Palmarole MDA.P.11, ADK Stab ZS-90, ADK Stab ZS-27. Suppliers are the following companies: Crompton, Eastman, and Adeka.

Specific compounds are, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

Examples of commercial processes which employ a grafting reaction of this type are the SIOPLAS and MONOSIL processes as, for example described in US 5,420,208.

All additives can be added in a compounding step, via masterbatch, via direct dosing or silane solution if applicable.

A further aspect of the invention is a process for increasing the crosslinking/curing rate of vinyl silane grafted polyolefins in the presence of water or moisture, which process comprises
a) grafting a vinyl silane onto the polyolefin in the presence of a free radical generator; and
b) crosslinking the grafted silane in the presence of water or moisture; the process being characterized in that the polyolefin contains a combination of
   (i) a sterically hindered amine and
   (ii) a phenolic antioxidant selected from the group consisting of octadecyl-3-(3,5-di-tert.butyl-4-hydroxyphenyl)-propionate, ethylenebis(oxyethylene)bis-(3-(5-tert-butyl-4-hydroxy-m-tolyl)-propionate), 2-(1,1-dimethylethyl)-6-[3-(1,1-dimethylethyl)-2-hydrxy-5-methylphenyl]-methyl-4-methylphenyl acrylate,
      Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-methylenebis (4-ethyl-6-tert-butylphenol), 2,2'-methylenebis (4-methyl-6-tert-butylphenol), 1,1'-bis(3,5-di-tert.butyl-4-hydroxyphenyl)-methane, 1,1'-bis (2-methyl-4-hydroxy-5-tert-butylphenyl)butan, 1,3,5-tris(3,5-di-tert-butyl-4-hydroxybenzyl)-1,3,5-triazine-2,4,6(1H,3H,5H)-trione, N,N'-hexane-1,6-diylbis(3-(3,5-di-tert-butyl-4-hydroxyphenylpropionamide)), 1,3,5-tris(4-tert-butyl-3-hydroxy-2,6-xylyl)methyl)-1,3,5-triazine-2,4,6-(1H,3H,5H)-trione, bis-[3,3-bis-(4'-hydroxy-3'-t-butylphenyl)-butane acid] glycolester,
      (2,4,6-trioxo-1,3,5-triazine-1,3,5(2H,4H,6H)-triyl)triethylene tris(3-(3,5-di-tert-butyl-4-hydroxyphenyl)propionate),
      1,1',3-tris(2-methyl-4-hydroxyl-5-tert.butyl-phenyl)butane and mixtures thereof.

Definitions and preferences given above apply also for the other aspect of the invention.

The following examples illustrate the invention.

### A) Compounding

3.5 kg ground polymer (Exxon LL4004) is mixed with the respective amount of additives (Table 1) by a high speed mixing.

**Table 1:**

| | Phenolic antioxidant | Sterically hindered amine |
|---|---|---|
| Reference 1 | 0.3% AO-1 | |
| Reference 2 | 0.3% AO-2 | |
| Reference 3 | 0.3% AO-2 | |
| example 1 | 0.050 % AO-2 | 0.250 % HAS-1 |
| example 2 | 0.075 % AO-2 | 0.225 % HAS-1 |
| example 3 | 0.200 % AO-2 | 0.100 % HAS-1 |
| example 4 | 0.050 % AO-2 | 0.250 % HAS-2 |
| example 5 | 0.075 % AO-2 | 0.225 % HAS-2 |
| example 6 | 0.125% AO-2 | 0.175% HAS-2 |
| example 7 | 0.200 % AO-2 | 0.100 % HAS-2 |
| example 8 | 0.175 % AO-2 | 0.125 % HAS-3 |
| example 9 | 0.175 % AO-2 | 0.125 % HAS-4 |
| example 10 | 0.175 % AO-2 | 0.125 % HAS-5 |
| example 11 | 0.175 % AO-2 | 0.125 % HAS-6 |
| example 12 | 0.200 % AO-3 | 0.125 % HAS-1 |

- AO-1:: Pentaerythritol Tetrakis(3-(3,5-di-tert-butyl-4-hydroxyphenyl)-propionate)
- AO-2:: 1,3,5-tris(3,5-di-tert-butyl-4-hydroxybenzyl)-1,3,5-triazine-2,4,6(1 H,3H,5H)-trione
- AO-3:: N,N'-hexane-1,6-diylbis(3-(3,5-di-tert-butyl-4-hydroxyphenyl-propionamide))
- HAS-1:: 1,6-Hexanediamine, N, N'-bis(2,2,6,6-tetramethyl-4-piperidinyl)-polymer with 2,4,6-trichloro-1,3,5-triazine, reaction products with N-butyl-1-butanamine an N-butyl-,6,6-tetramethyl-4-piperidin-amine
- HAS-2:: Example 2 of US-6 117 995
- HAS-3:: (1-(2-Hydroxy-2-methylpropoxy)-4-octadecanoyloxy-2,2,6,6-tetramethylpiperidine)
- HAS-4:: Reaction products of N, N'-ethane -1,2-diylbis (1,3-propane-diamine), cyclohexane, peroxidized 4-butylamino-2,2,6,6-tetramethylpiperidine and 2,4,6-trichloro-1,3,5-triazine
- HAS-5:: CAS:86168-95-8
- HAS-6:: reaction product of N,N',N",N"'-tetrakis(4,6-bis(butyl-(N-methyl- 2,2,6,6-tetramethylpiperidin-4-yl)amino)triazin-2-yl)-4,7-diazadecane-1,10-diamine Butanedioic acid, dimethyl ester, polymer with 4-hydroxy-2,2,6,6-tetramethyl-1-piperidineethanol
The blend is extruded with a twin screw extruder (Theysohn TSK 30/44) at 200 °C and pelletized.

### B) Sheet extrusion

3 kg compound pellets, preheated at 80 °C, are placed into a round flask. 45 g of Dynasylan Silfin 06 (a mixture of Vinyltrismethoxysilane, Dicumylperoxide and Di-n-butyltin laurate) are added. This mixture is heated (water bath at 60 °C) and rotated until the Dynasylan Silfin 06 is soaked and the pellets appear to be dry.
These dry pellets are extruded (Collin CR-136 / 350, mass temperature 160 - 170 °C) to 0.9 mm thick sheets.

### C1) Curing in water bath

The sheets from the sheet extrusion step are stored in a water bath at 90 °C for 2 hours. Afterwards dumbbells are cut out for the hot set test. The rest of the sheets are stored in the water bath at 90°C for >24 hours to fully crosslink. Out of these crosslinked sheets dumbbells are cut out for the oven aging test.

### C2) Curing in humidity chamber

Dumb-bells are cut out of the sheets from the sheet extrusion step and stored in a humidity chamber at 40 °C and 90% relative humidity for 1 day. Afterwards these dumbbells are evaluated via hot set test.

In a hot set test (200 °C, 20N/cm²) the cured samples (according to steps C1) or C2)) should show an elongation < 100%.
After fully crosslinking the samples should show a minimum retained elongation after 10 days oven aging > 75%.

### D) Hot set test:

5 dumb-bell specimens are cut out from the center of the sheets, according to IEC 811-2-1 specifications. A distance of 20 mm is marked by two lines on each dumb-bell test piece. The cross-sectional area in mm² of each dumb-bell piece from the width 4 mm is calculated, and the smallest of three thickness measurements between the marker lines. Weights are assembled to the dumb-bells with respect to their thickness to reach a constant load of 20 N cm⁻². The whole hot set test assembly, (with the five dumb-bells taken from a single sample) is placed in the oven at 200 °C for 15 minutes and the elongation is measured visually after these 15 minutes. The value of elongation of a sample is obtained by taking the elongation average of the unbroken elongated dumb-bells among the five initial ones

**Table 2: Hot Set Test results**

| | After 2 hours water bath at 90 °C | After 1 day humidity chamber (40 °C/ 90 %RH) |
|---|---|---|
| Reference 1 | 109% | 177% |
| Reference 2 | 157% | |
| Reference 3 | 175% | |
| example 1 | 59% | 34% |
| example 2 | 50% | 33% |
| example 3 | | 34% |
| example 4 | | 75% |
| example 5 | 64% | 29% |
| example 6 | 90% | 45% |
| example 7 | | 58% |
| example 8 | 58% | |
| example 9 | 71% | |
| example 10 | 54% | |
| example 11 | 80% | |
| example 12 | 79% | |

Reference 1 represents the state of the art formulation for cable compounds.
All tested inventive examples (Table 2) show a significant improvement of the curing behavior (faster curing than reference, i.e. lower elongation after the same curing conditions) both during hot water bath curing and during curing at ambient conditions (humidity chamber, 40 °C/ 90% RH).

### E) Oven aging test at 150 °C:

5 dumb-bell specimens per formulation are stored in a hot air oven with natural airflow at 150 °C. After 10 days exposure retained elongation is measured according to ISO 527 (Table 3)

**Table 3: Oven aging result**

| | |
|---|---|
| example 1 | 90 |
| example 2 | 88 |
| example 3 | 96 |
| example 4 | 92 |
| example 5 | 98 |
| example 6 | 95 |
| example 7 | 92 |
| example 8 | 75 |
| example 9 | 77 |
| example 10 | 75 |
| example 11 | Open |
| example 12 | 90 |

To meet cable requirements the samples should show > 75% retained elongation after 10 days at 150 °C aging. All tested samples (Table 3) are passing this requirement.

## Claims

1. Use of a combination of a sterically hindered amine and a phenolic antioxidant for increasing the crosslinking/curing rate of vinyl silane grafted polyolefins in the presence of water or moisture.

2. Use according to claim 1 wherein the polyolefin is polyethylene or a copolymer thereof.

3. Use according to claim 1 wherein the sterically hindered amine contains at least one radical of the formula 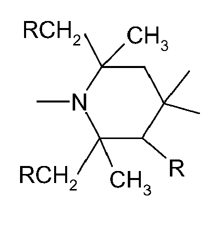 in which R is hydrogen or methyl.

4. Use according to claim 1 wherein the sterically hindered amine is selected from the group consisting of bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decan-2,4-dione, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)-ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane and reaction product of maleic acid anhydride-a-olefin-copolymer with 2,2,6,6-tetramethyl-4-aminopiperidine, 1,2,2,6,6-pentamethyl-4-aminopiperidine or a compound 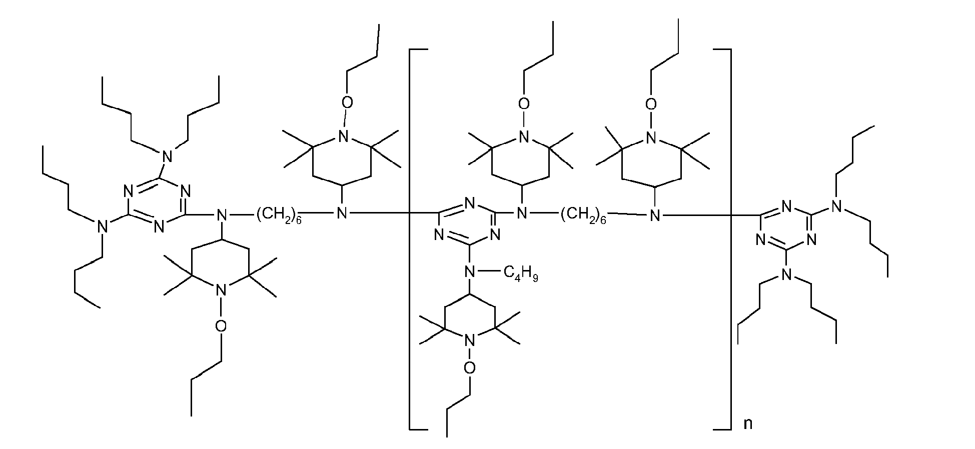 in which n is from 1 to 15.

5. Use according to claim 1 wherein the phenolic antioxidant is selected from the group consisting of 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-dinonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol, 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate, α-tocopherol, β-tocopherol, γ-tocopherol, δ-tocopherol and mixtures thereof, 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 1,1,5,5-tetra-(5-tert-butyl-4-hydroxy-2-methylphenyl)pentane, dioctadecyl-2,2-bis-(3,5-di-tert-butyl-2-hydroxybenzyl)-malonate, di-octadecyl-2-(3-tert-butyl-4-hydroxy-5-methylbenzyl)-malonate, bis[4-(1,1,3,3-tetramethylbutyl)phenyl]-2,2-bis(3,5-di-tert-butyl-4-hydroxybenzyl)malonate, 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate, dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid, esters of P-(3,5-di-tert-butyl-4-hydroxyphenyl)propionic acid with mono- or polyhydric alcohols, with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of P-(5-tert-butyl-4-hydroxy-3-methylphenyl)propionic acid with mono- or polyhydric alcohols, with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of β-(3,5-dicyclohexyl-4-hydroxyphenyl)propionic acid with mono- or polyhydric alcohols, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, esters of 3,5-di-tert-butyl-4-hydroxyphenyl acetic acid with mono- or polyhydric alcohols, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, trimethylhexanediol, trimethylolpropane, 4-hydroxymethyl-1-phospha-2,6,7-trioxabicyclo[2.2.2]octane, amides of β-(3,5-di-tert-butyl-4-hydroxyphenyl)propionic acid, N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide and N,N'-bis[2-(3-[3,5-di-tert-butyl-4-hydroxyphenyl]-propionyloxy)ethyl]oxamide.

6. Use according to claim 1 wherein the phenolic antioxidant is selected from the group consisting of octadecyl-3-(3,5-di-tert.butyl-4-hydroxyphenyl)-propionate, pentaerythritol tetrakis(3-(3,5-di-tert-butyl-4-hydroxyphenyl)-propionate), 3,3',3",5,5',5"-hexa-tert-butyl-alpha, alpha', alpha" - (mesitylene-2,4,6-triyl)tri-p-cresol, 1,3,5-tris(3,5-di-tert-butyl-4-hydroxybenzyl)-1,3,5-triazine-2,4,6(1 H,3H,5H)-trione, N,N'-hexane-1,6-diylbis(3-(3,5-di-tert-butyl-4-hydroxyphenylpropionamide)), ethylenebis(oxyethylene)bis-(3-(5-tert-butyl-4-hydroxy-m-tolyl)-propionate), 1,3,5-tris(4-tert-butyl-3-hydroxy-2,6-xylyl)methyl)-1,3,5-triazine-2,4,6-(1 H,3H,5H)-trione, 2-(1,1-dimethylethyl)-6-[3-(1,1-dimethylethyl)-2-hydrxy-5-methylphenyl]-methyl-4-methylphenyl acrylate, Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-methylenebis (4-ethyl-6-tert-butylphenol), 2,2'-methylenebis (4-methyl-6-tert-butylphenol), 1,1',3-tris(2-methyl-4-hydroxyl-5-tert.butyl-phenyl)butane, 1,1'-bis(3,5-di-tert.butyl-4-hydroxyphenyl)-methane, bis-[3,3-bis-(4'-hydroxy-3'-t-butylphenyl)-butane acid] glycolester, (2,4,6-trioxo-1,3,5-triazine-1,3,5(2H,4H,6H)-triyl)triethylene tris(3-(3,5-di-tert-butyl-4-hydroxyphenyl)-propionate), 1,1'-bis(2-methyl-4-hydroxy-5-tert-butylphenyl)butan, 2,2'-ethylidenebis (4,6-di-tert-butylphenol), 2,2'-methylenebis (4,6-di-tert-butylphenol) and 2'-methylenebis (4-(2n-butylene)-6-tert-butylphenol).

7. Use according to claim 7 wherein the phenolic antioxidant is selected from the group consisting of octadecyl-3-(3,5-di-tert.butyl-4-hydroxyphenyl)-propionate, Ethylenebis(oxyethylene)bis-(3-(5-tert-butyl-4-hydroxy-m-tolyl)-propionate), 2-(1,1-d imethylethyl)-6-[3-(1,1-d imethylethyl)-2-hydrxy-5-methylphenyl]-methyl-4-methylphenyl acrylate, Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-Methylenebis (4-ethyl-6-tert-butylphenol), 2,2'-Methylenebis (4-methyl-6-tert-butylphenol), 1,1'-bis(3,5-di-tert.butyl-4-hydroxyphenyl)-methane, 1,1'-bis (2-methyl-4-hydroxy-5-tert-butylphenyl)butan, 1,3,5-tris(3,5-di-tert-butyl-4-hydroxybenzyl)-1,3,5-triazine-2,4,6(1 H,3H,5H)-trione, N,N'-hexane-1,6-diylbis(3-(3,5-di-tert-butyl-4-hydroxyphenylpropionamide)), 1,3,5-tris(4-tert-butyl-3-hydroxy-2,6-xylyl)methyl)-1,3,5-triazine-2,4,6-(1H,3H,5H)-trione, bis-[3,3-bis-(4'-hydroxy-3'-t-butylphenyl)-butane acid] glycolester, (2,4,6-trioxo-1,3,5-triazine-1,3,5(2H,4H,6H)-triyl)triethylene tris(3-(3,5-di-tert-butyl-4-hydroxyphenyl)propionate), 1,1',3-tris(2-methyl-4-hydroxyl-5-tert.butyl-phenyl)butane and mixtures thereof.

8. Use according to claim 1 wherein the vinyl silane is selected from the group consisting of vinyl trimethoxy silane, vinyl triethoxy silane, vinyl tri-i-propoxy silane, 3-methacryloxypropyltrimethoxysilane and mixtures thereof.

9. Use according to claim 1 wherein the sterically hindered amine is present in an amount of from 0.01 to 5 % by weight based on the weight of the polyolefin.

10. Use according to claim 1 wherein the phenolic antioxidant is present in an amount of from 0.01 to 2 % by weight based on the weight of the polyolefin.

11. Use according to claim 1 wherein the vinyl silane is present in an amount of from 0.01 to 10 % by weight based on the weight of the polyolefin.

12. Use according to claim 1 wherein the weight ratio between the phenolic antioxidant and the sterically hindered amine is from 0.5 / 20 to 20 / 0.5.

13. A process for increasing the crosslinking/curing rate of vinyl silane grafted polyolefins in the presence of water or moisture, which process comprises
a) grafting a vinyl silane onto the polyolefin in the presence of a free radical generator; and
b) crosslinking the grafted silane in the presence of water or moisture; the process being **characterized in that** the polyolefin contains a combination of
(i) a sterically hindered amine and
(ii) a phenolic antioxidant selected from the group consisting of octadecyl-3-(3,5-di-tert.butyl-4-hydroxyphenyl)-propionate, Ethylenebis(oxyethylene)bis-(3-(5-tert-butyl-4-hydroxy-m-tolyl)-propionate), 2-(1,1-dimethylethyl)-6-[3-(1,1-dimethylethyl)-2-hydrxy-5-methylphenyl]-methyl-4-methylphenyl acrylate,
Calcium-bis (((3,5-bis(1,1-dimethylethyl)-4-hydroxyphenyl)methyl)-ethylphosphonate), diethyl ((3,5-bis(1,1-dimethylethyl)-4-hydroxyphenyl)methyl) phosphonate, 2,2'-Methylenebis (4-ethyl-6-tert-butylphenol), 2,2'-Methylenebis (4-methyl-6-tert-butylphenol), 1,1'-bis(3,5-di-tert.butyl-4-hydroxyphenyl)-methane, 1,1'-bis (2-methyl-4-hydroxy-5-tert-butylphenyl)butan, 1,3,5-tris(3,5-di-tert-butyl-4-hydroxybenzyl)-1,3,5-triazine-2,4,6(1 H,3H,5H)-trione, N,N'-hexane-1,6-diylbis(3-(3,5-di-tert-butyl-4-hydroxyphenylpropionamide)), 1,3,5-tris(4-tert-butyl-3-hydroxy-2,6-xylyl)methyl)-1,3,5-triazine-2,4,6-(1H,3H,5H)-trione, bis-[3,3-bis-(4'-hydroxy-3'-t-butylphenyl)-butane acid] glycolester, (2,4,6-trioxo-1,3,5-triazine-1,3,5(2H,4H,6H)-triyl)triethylene tris(3-(3,5-di-tert-butyl-4-hydroxyphenyl)propionate), 1,1',3-tris(2-methyl-4-hydroxyl-5-tert.butyl-phenyl)butane and mixtures thereof.
